# EUROPÄISCHE PATENTSCHRIFT

(11) **EP 2 266 747 B1**
(45) Veröffentlichungstag und Bekanntmachung des Hinweises auf die Patenterteilung: **08.02.2012**
(21) Anmeldenummer: 10166991.9
(22) Anmeldetag: 23.06.2010
(51) Int. Cl.: B23Q 1/52

(54) **Vertikal-Drehmaschine**
Vertical rotating machine
Machine rotative verticale

(30) Priorität: 27.06.2009 DE 202009008850 U
(43) Veröffentlichungstag der Anmeldung: 29.12.2010
(73) Patentinhaber: ELHA-Maschinenbau Liemke KG, 33161 Hövelhof (DE)
(72) Erfinder: Renneke, Dieter Ferdinand, 33161 Hövelhof (DE); Plöger, Volker, 33619 Bielefeld (DE)
(74) Vertreter: Dantz, Jan Henning

(56) Entgegenhaltungen:
- DE-U1-202007 017 253

## Beschreibung

Die Erfindung betrifft eine Vertikal-Drehmaschine nach dem Oberbegriff des Anspruchs 1.

Mittels derartiger Vertikal-Drehmaschinen werden vor allem groß dimensionierte Bauteile bearbeitet, beispielsweise Rotoren von Windkrafträdern oder dergleichen, die neben großen räumlichen Abmaßen sehr schwer sind.

Bei der Bearbeitung wird das aufgespannte Werkstück durch Verdrehung des Arbeitstisches in die jeweils gewünschte Position gebracht, in der dann das spanende Werkzeug in Eingriff kommt.

Die Verdrehung erfolgt bislang über mindestens einen Motor mit einer Antriebswelle, die über ein Zahnradgetriebe mit dem Arbeitstisch in Eingriff steht.

Aufgrund der zu bewegenden Massen, die sich aus dem Gewicht des Bauteiles und aus dem des Arbeitstisches ergeben, werden vor allem die Getriebeteile, wie die genannten Zahnräder, in sehr hohem Maße mechanisch beansprucht, insbesondere bei einer Beschleunigung und Abbremsung, was sich nachteilig auf die Standzeit der gesamten Vertikal-Drehmaschine auswirkt.

Naturgemäß ist dies mit erheblichen Kosten verbunden, die sich zum einen aus einer notwendigen Reparatur der verschlissenen Teile ergibt und zum anderen aus den Stillstandszeiten der Maschine.

Aber auch die Bearbeitungszeiten, zu denen die Beschleunigungs- und Abbremszeiten zählen, sind durch den verwendeten Antrieb nicht weiter zu verkürzen, so dass die bekannte Vertikal-Drehmaschine hinsichtlich der gestellten Forderungen nach einem wirtschaftlich optimierten Betrieb nicht gerecht wird.

Darüber hinaus gestaltet sich eine erforderliche Reparatur insbesondere der Antriebseinheit schwierig, da ein Zugang zu den entsprechenden Bauteilen nur mit einem großen Demontageaufwand möglich ist.

Eine gattungsgemäße Vertikal-Drehmaschine ist aus der DE 20 2007 017353 U1 bekannt. Der darin geoffenbarte Wanderfeldmotor ist in einer ringzylindrischen Ausnehmung des Untertisches angeordnet, wobei der Rotor und der Stator hochkant positioniert sind, unter Bildung eines vertikal verlaufenden Luftspalts.

Der Erfindung liegt die Aufgabe zugrunde, eine Vertikal-Drehmaschine der gattungsgemäßen Art so weiterzuentwickeln, dass sie konstruktiv einfacher aufgebaut ist und kostengünstiger herstell- und betreibbar ist.

Diese Aufgabe wird durch eine Vertikal-Drehmaschine mit den Merkmalen des Anspruchs 1 gelöst.

Durch diese konstruktive Ausgestaltung einer Vertikal-Drehmaschine ist eine besonders effiziente Bearbeitung insbesondere großer Bauteile möglich, da der Einsatz eines Wanderfeldmotors erhebliche Vorteile mit sich bringt.

Zunächst einmal kann auf ein Getriebe verzichtet werden, da die einen Stator bildenden Primärsegmente in unmittelbarer Korrespondenz zu den einen Läufer bildenden Sekundär-Segmenten stehen.

Der auch als Linearmotor bekannte Wanderfeldmotor wird im vorliegenden Fall zum rotierenden Antrieb des Arbeitstisches genutzt, der die Sekundär-Segmente aufnimmt.

Diese sind in einem Trägerring des Arbeitstisches fest positioniert und, ebenso wie die unmittelbar gegenüberliegenden Primär-Segmente, ringförmig angeordnet.

Durch den möglichen Verzicht auf ein Getriebe, insbesondere auf ein ZahnradGetriebe, ist die Stör- und Verschleißanfälligkeit insgesamt minimiert, so dass die sich daraus ergebenden, nicht unerheblichen Kosten vollständig entfallen.

Die Beschleunigungs- und Bremszeiten sind prinzipbedingt bei einem Wanderfeldmotor sehr gering, mit der Folge einer Verkürzung der Bearbeitungszeit in einem durchaus bemerkenswerte Maße.

Neben seiner einfachen Bauart zeichnet sich der Wanderfeldmotor durch seine Robustheit aus, die eine hohe Standzeit garantiert, so dass die Betriebskosten gegenüber einer Vertikal-Drehmaschine nach dem Stand der Technik erheblich gesenkt sind.

Für den Fall, dass eines der ortsfesten Primär-Segmente schadhaft sein sollte und ausgetauscht werden muss, ist nach einer vorteilhaften Weiterbildung der Erfindung vorgesehen, den Arbeitstisch mit einer Durchgriffsöffnung zu versehen, die mit einem abnehmbaren Deckel verschlossen ist und durch die ein Zugriff zum Austausch des entsprechenden Primärsegments möglich ist.

Dabei ist die Durchgriffsöffnung in ihrer Grundfläche so dimensioniert, dass ein jeweiliges Primärsegment bequem demontier- und herausnehmbar ist.

Die Positionierung des Arbeitstisches hin zu dem auszuwechselnden Primärsegment kann taktweise erfolgen, wobei für einen freien Durchgriff zu dem entsprechenden Primär-Segment zweckmäßigerweise eine entsprechende Anzahl Sekundär-Segmente, die am Arbeitstisch positioniert sind, herausgenommen werden können, so dass ein freier Zugriff auf das Primär-Segment gegeben ist.

Um eine weitgehend hermetische Abdichtung des den Wanderfeldmotor aufnehmenden Innenraumes sowohl des Untertisches wie auch des Arbeitstisches zu erreichen, ist im Außenrandbereich des Untertisches in Korrespondenz mit entsprechend konfigurierten Bauteilen des Arbeitstisches eine Dichtung geschaffen, die bevorzugt aus einem umlaufenden, mit einer Flüssigkeit gefüllten Dichtraum des Untertisches besteht, in die ein umlaufender Steg des Arbeitstisches eintaucht.

Zweckmäßigerweise ist im Bodenbereich des Dichtraumes ein verschließbarer Ablauf vorgesehen, über den die Flüssigkeit im Bedarfsfall, wenn diese beispielsweise wegen Verschmutzung gewechselt werden soll, abgelassen werden kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Vertikal-Drehmaschine in einer Vor- deransicht
- Figur 2: die Vertikal-Drehmaschine in einer Draufsicht
- Figur 3: einen Teilausschnitt der Vertikal-Drehmaschine gesehen in Richtung der Pfeile A-A in Figur 2
- Figuren 4 und 5: jeweils eine geschnittene Draufsicht auf unterschiedliche Bauteile der Vertikal-Drehmaschine.

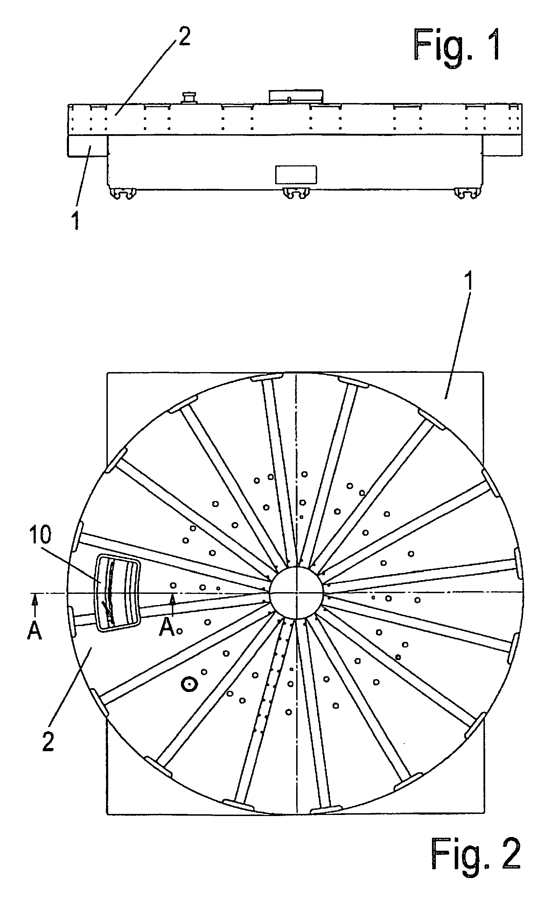

In den Figuren 1 und 2 ist ein Teil einer Vertikal-Drehmaschine dargestellt, mit einem ortsfesten oder verfahrbaren Untertisch 1 und einem darauf gelagerten, relativ dazu um eine vertikale Achse mittels eines Motors drehbaren Arbeitstisch 2, der als Rundtisch gestaltet ist, zur Aufnahme mindestens eines insbesondere spanend zu bearbeitenden Werkstücks.

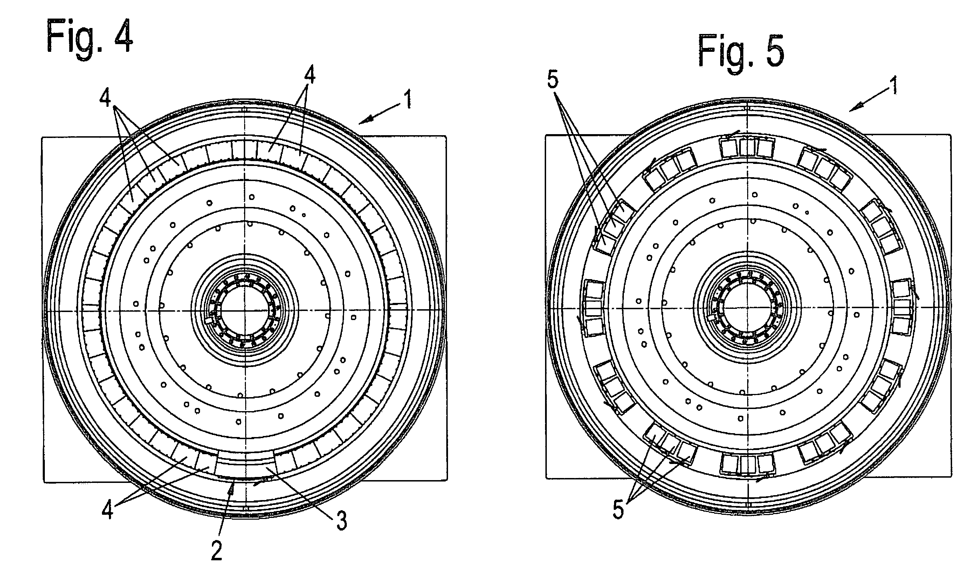

Erfindungsgemäß ist der Motor als Wanderfeldmotor ausgebildet, bei dem die den Stator bildenden Primär-Segmente 5 im Untertisch 1 (Figur 5) und die den Läufer bildenden Sekundär-Segmente 4 (Figur 4) im Arbeitstisch 2 positioniert sind.

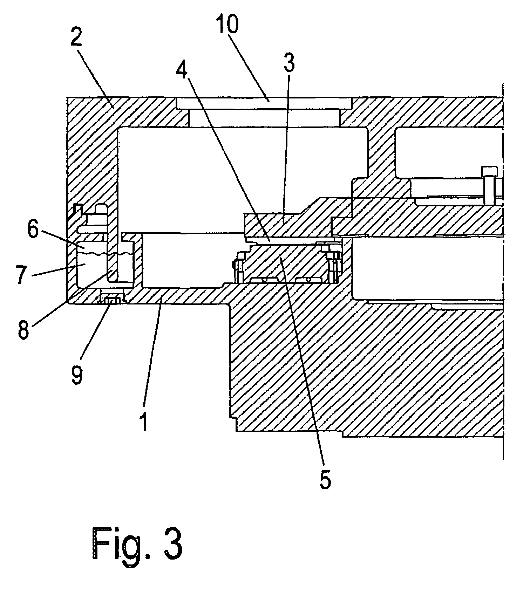

In den Figuren 4 und 5 ist jeweils ein Querschnitt durch die Vertikal-Drehmaschine gezeigt, wobei die Figur 4 eine Draufsicht wiedergibt, in der auf die Darstellung des Arbeitstisches 2 verzichtet ist. Hier sind lediglich die ringförmig angeordneten Sekundär-Segmente 4 erkennbar, die an einem Trägerring 3 des Arbeitstisches 2 befestigt sind, der besonders deutlich in der Figur 3 zu sehen ist.

Die Figur 5 zeigt den Untertisch 1 mit den eingebauten Primär-Segmenten 5, die ebenfalls ringförmig angeordnet sind.

Die Figur 2 ebenso wie die Figur 3 zeigen die Anordnung einer im Arbeitstisch 2 angeordneten Durchgriffsöffnung 10, die auf der Spannseite des Arbeitstisches 2 angeordnet ist im Überdeckungsbereich einer oder zweier Sekundär-Segmente 4, wobei der diese haltende Trägerring 3 so konzipiert ist, dass er zusammen mit einem oder zwei Sekundär-Segmenten 4 aus der Durchgriffsöffnung 10 entnehmbar ist, um einen freien Zugriff auf ein oder zwei darunter liegende Primär-Segmente 5 zu erhalten.

Die Durchgriffsöffnung 10 kann im Übrigen durch einen Deckel verschlossen werden, so dass der gebildete Innenraum, in dem der Wanderfeldmotor angeordnet ist, hermetisch gegenüber dem Arbeitsraum der Maschine verschlossen ist.

Im Außenrandbereich ist zwischen den drehbaren Arbeitstisch 2 und dem Untertisch 1 eine Flüssigkeitsdichtung vorgesehen, die aus einem eine Flüssigkeit 7 aufnehmenden Dichtraum 6 und einem vertikal ausgerichteten, in die Flüssigkeit 7 eintauchenden Steg 8 des Arbeitstisches 2 besteht, so dass kein Schmutz von außen unmittelbar in den gebildeten Innenraum dringen kann.

Bei Bedarf kann die Flüssigkeit 7 über eine bodenseitig im Dichtraum 6 angeordneten Ablass 9 entfernt werden.

## Patentansprüche

1. Vertikal-Drehmaschine, mit einem Untertisch (1) und einem darauf gelagerten, relativ dazu um eine vertikale Achse mittels eines Wanderfeldmotors drehbaren Arbeitstisch (2), vorzugsweise einem Rundtisch, zur Aufnahme mindestens eines insbesondere spanend zu bearbeitenden Werkstücks, wobei den Stator bildende Primär-Segmente (5) des Wanderfeldmotors im Untertisch (1) und den Läufer bildende Sekundär-Segmente (4) im Arbeitstisch (2) positioniert sind, **dadurch gekennzeichnet, dass** die Primär-Segmente (5) und die Sekundär-Segmente (4) übereinander liegend angeordnet sind, unter Bildung eines horizontalen Luftspalts.

2. Vertikal-Drehmaschine nach Anspruch 1, **dadurch gekennzeichnet, dass** die Sekundär-Segmente (4) an einem Trägerring (3) befestigt sind.

3. Vertikal-Drehmaschine nach Anspruch 1 oder 2, **dadurch gekennzeichnet, dass** der Arbeitstisch (2) im Überdeckungsbereich mit einem Teil der Sekundär-Segmente (4) bzw. der Primär-Segmente (5) eine Durchgriffsöffnung (10) aufweist.

4. Vertikal-Drehmaschine nach einem der vorhergehenden Ansprüche, **dadurch gekennzeichnet, dass** die Durchgriffsöffnung (10) durch einen abnehmbaren Deckel verschlossen ist.

5. Vertikal-Drehmaschine nach einem der vorhergehenden Ansprüche, **dadurch gekennzeichnet, dass** ein Teil des Trägerringes (3) mit angeschlossenen Sekundär-Segmenten (4) über die Durchgriffsöffnung (10) entnehmbar ist.

6. Vertikal-Drehmaschine nach einem der vorhergehenden Ansprüche, **dadurch gekennzeichnet, dass** der den Wanderfeldmotor aufnehmende, durch den Untertisch (1) und den Arbeitstisch (2) gebildete Innenraum hermetisch abgedichtet ist.

7. Vertikal-Drehmaschine nach einem der vorhergehenden Ansprüche, **dadurch gekennzeichnet, dass** im Außenrandbereich zwischen dem Untertisch (1) und dem Arbeitstisch (2) umlaufend eine Dichtung vorgesehen ist.

8. Vertikal-Drehmaschine nach einem der vorhergehenden Ansprüche, **dadurch gekennzeichnet, dass** die Dichtung als Flüssigkeitsdichtung ausgebildet ist.

9. Vertikal-Drehmaschine nach einem der vorhergehenden Ansprüche, **dadurch gekennzeichnet, dass** der Untertisch (1) einen mit Flüssigkeit (7) gefüllten Dichtraum (6) aufweist.

10. Vertikal-Drehmaschine nach einem der vorhergehenden Ansprüche, **dadurch gekennzeichnet, dass** in die Flüssigkeit (7) ein Steg (8) des Arbeitstisches (2) eintaucht.

11. Vertikal-Drehmaschine nach einem der vorhergehenden Ansprüche, **dadurch gekennzeichnet, dass** der Steg (8) vertikal ausgerichtet ist.

12. Vertikal-Drehmaschine nach einem der vorhergehenden Ansprüche, **dadurch gekennzeichnet, dass** am Boden des Dichtraumes (6) mindestens ein Ablass (9) vorgesehen ist.

## Claims

1. Vertical lathe, having an undertable (1) and a work table (2), preferably a rotary table, which is mounted thereon and is rotatable in relation thereto about a vertical axis by means of a travelling-field motor, said work table being intended to hold at least one workpiece in particular to be machined, wherein stator-forming primary segments (5) of the travelling-field motor are positioned in the undertable (1) and rotor-forming secondary segments (4) are positioned in the work table (2), **characterized in that** the primary segments (5) and the secondary segments (4) are arranged one above the other, forming a horizontal air gap.

2. Vertical lathe according to Claim 1, **characterized in that** the secondary segments (4) are fastened on a carrier ring (3).

3. Vertical lathe according to Claim 1 or 2, **characterized in that** the work table (2) has a through-opening (10) in the region overlapping a part of the secondary segments (4) or of the primary segments (5).

4. Vertical lathe according to one of the preceding claims, **characterized in that** the through-opening (10) is closed by a removable cover.

5. Vertical lathe according to one of the preceding claims, **characterized in that** a part of the carrier ring (3) having attached secondary segments (4) can be removed via the through-opening (10).

6. Vertical lathe according to one of the preceding claims, **characterized in that** the interior space that accommodates the travelling-field motor and is formed by the undertable (1) and the work table (2) is hermetically sealed.

7. Vertical lathe according to one of the preceding claims, **characterized in that** an encircling seal is provided in the outer edge region between the undertable (1) and the work table (2).

8. Vertical lathe according to one of the preceding claims, **characterized in that** the seal is in the form of a liquid-tight seal.

9. Vertical lathe according to one of the preceding claims, **characterized in that** the undertable (1) has a sealing chamber (6) filled with liquid (7).

10. Vertical lathe according to one of the preceding claims, **characterized in that** a rib (8) of the work table (2) dips into the liquid (7).

11. Vertical lathe according to one of the preceding claims, **characterized in that** the rib (8) is oriented vertically.

12. Vertical lathe according to one of the preceding claims, **characterized in that** at least one drain (9) is provided at the bottom of the sealing chamber (6).

## Revendications

1. Machine rotative verticale dotée d'une table inférieure (1) et d'une table de travail (2) logée dessus, pouvant tourner par rapport à celle-ci autour d'un axe vertical à l'aide d'un moteur linéaire, de préférence une table ronde, pour la réception au moins d'une pièce à usiner notamment par enlèvement de copeaux, sachant que des segments primaires (5) formant le stator du moteur linéaire sont positionnés dans la table inférieure (1) et des segments secondaires (4) formant le rotor sont positionnés dans la table de travail (2), **caractérisée en ce que** les segments primaires (5) et les segments secondaires (4) sont disposés les uns au-dessus des autres en formant une fente d'air horizontale.

2. Machine rotative verticale selon la revendication 1, **caractérisée en ce que** les segments secondaires (4) sont fixés sur un anneau porteur (3).

3. Machine rotative verticale selon la revendication 1 ou 2, **caractérisée en ce que** la table de travail (2) présente une ouverture de préhension (10) dans la zone de recouvrement avec une partie des segments secondaires (4) ou des segments primaires (5).

4. Machine rotative verticale selon l'une quelconque des revendications précédentes, **caractérisée en ce que** l'ouverture de préhension (10) est fermée par un couvercle amovible.

5. Machine rotative verticale selon l'une quelconque des revendications précédentes, **caractérisée en ce qu'**une partie de l'anneau porteur (3) avec des segments secondaires (4) raccordés peut être retirée par le biais de l'ouverture de préhension (10).

6. Machine rotative verticale selon l'une quelconque des revendications précédentes, **caractérisée en ce que** l'espace intérieur formé par la table inférieure (1) et la table de travail (2), recevant le moteur linéaire est rendu hermétiquement étanche.

7. Machine rotative verticale selon l'une quelconque des revendications précédentes, **caractérisée en ce qu'**une garniture est prévue de manière périphérique dans la zone de bord extérieure entre la table inférieure (1) et la table de travail (2).

8. Machine rotative verticale selon l'une quelconque des revendications précédentes, **caractérisée en ce que** la garniture est réalisée comme un joint hydraulique.

9. Machine rotative verticale selon l'une quelconque des revendications précédentes, **caractérisée en ce que** la table inférieure (1) présente un espace étanche (6) rempli de liquide (7).

10. Machine rotative verticale selon l'une quelconque des revendications précédentes, **caractérisée en ce qu'**une nervure (8) de la table de travail (2) s'enfonce dans le liquide (7).

11. Machine rotative verticale selon l'une quelconque des revendications précédentes, **caractérisée en ce que** la nervure (8) est orientée verticalement.

12. Machine rotative verticale selon l'une quelconque des revendications précédentes, **caractérisée en ce qu'**au moins une évacuation (9) est prévue sur le fond de l'espace étanche (6).
